# EUROPÄISCHE PATENTSCHRIFT

(11) **EP 2 116 120 B1**
(45) Veröffentlichungstag und Bekanntmachung des Hinweises auf die Patenterteilung: **11.05.2016**
(21) Anmeldenummer: 09005439.6
(22) Anmeldetag: 16.04.2009
(51) Int. Cl.: A01B 63/00

(54) **Verfahren zum Betrieben einer Steuerung für eine TRaktorgerätekombination mit wenigstens einer auswechselbare Ausrüstung**
Method for operating a control system for a tractor-implement combination comprising at least an interchangeable implement
Méthode de commande d'une combinaison tracteur-outil agricole comprenant au moins un équipement échangeable

(30) Priorität: 09.05.2008 DE 102008023068
(43) Veröffentlichungstag der Anmeldung: 11.11.2009
(73) Patentinhaber: CLAAS Saulgau GmbH, 88348 Bad Saulgau (DE)
(72) Erfinder: Ober, Martin, 78736 Trichtingen (DE); Pflanze, Sascha, 14822 Brück (DE)

(56) Entgegenhaltungen:
- EP-A- 1 044 591
- EP-A- 1 338 934
- EP-A- 1 666 996
- DE-A1- 19 943 561

## Beschreibung

Die Erfindung betrifft ein Verfahren zum Betrieben einer Steuerung für eine Traktorgerätekombination in der Landwirtschaft gemäß dem Oberbegriff des unabhängigen Anspruchs 1.

### Stand der Technik

Angebaute, gezogene oder aufgesattelte Landmaschinen zum Anbau an Traktoren in der Landwirtschaft sind im Regelfall Arbeitsmaschinen, die gemäß der EG-Maschinenrichtlinie als auswechselbare Ausrüstungen bezeichnet werden. Das bedeutet, dass diese auswechselbaren Ausrüstungen über kein eigenes Antriebssystem verfügen und diese daher erst in Verbindung mit einem Traktor zu einer einsatzfähigen und damit vollständigen Maschine werden.

Da es sich hierbei um Arbeitsmaschinen handelt, die vom Fahrer des Traktors als Bediener bzw. Operator gesteuert werden, existiert immer eine Schnittstelle "Mensch-Maschine", so wie diese in der EN ISO 12100-1:2003, Bild 1a beschrieben ist.

Der Fahrer dieser Maschinen steht somit in einer steuerungstechnischen Wechselwirkung einerseits mit dem Traktor als mobile Maschine und deren Kraftquelle Verbrennungsmotor als Antriebseinheit und andererseits mit der auswechselbaren Ausrüstung, die sein Traktor aufgenommen hat, und weiterhin mit der Umwelt, in der sich diese Maschineneinheit bewegt und zum Einsatz gebracht wird. Der Mensch als Fahrer (Operator im Sinne der EG-Maschinenrichtlinie) ist somit Teil der mobilen Einheit "Mensch-Maschine" und zugleich steuerungstechnisch gesehen Teil des kybernetischen Systems "Traktorauswechselbare Ausrüstung", die er sicher beherrschen und bei bestimmungsgemäßer Verwendung gefahrlos für sich selbst und seine Umwelt zum Einsatz bringen muss.

In diesem Zusammenhang gesehen - und insbesondere bei Traktoren mit auswechselbaren Ausrüstungen im oberen Leistungssegment, beispielsweise über 200kW mit großen Arbeitsbreiten - sind nicht nur die technischen Gegebenheiten der alles bestimmende Maßstab für die sichere Beherrschung derartiger Mensch-Maschine-Systeme, sondern hier kommt der Ergonomie eine besonders wichtige Bedeutung zu, damit dem Menschen nicht unter der damit einhergehenden psychischen Belastung (Stress) Fehler bei der Bedienung unterlaufen.

Der Traktor, als die universelle Antriebsmaschine in der Landwirtschaft, verfügt über Schnittstellen als Adapter zum Aufnehmen und Steuern der auswechselbaren Ausrüstung. Diese beinhalten verschiedene Anschlusspunkte, wie beispielsweise Dreipunkt-Kraftheber oder Zapfwellen zur Kraftübertragung, fluidische Steckverbindungen, wie hydraulische pneumatische Zapfstellen oder elektrische Steckverbindungen, aber auch Anschlusspunkte wie ISO-Bus-Stecker zur Übertragung von Steuersignalen, zur Betätigung von Aktoren oder zur Rückführung von Informationsinhalten zur Informationsgewinnung zu deren Anzeige auf geeigneten Anzeigeeinrichtungen, wie beispielsweise Displays. Dazu zählt aber auch die Kopplung von Jobrechnern mit Stell- und Anzeigeeinrichtungen und deren Kopplung mit traktoreigenen Stell- und Anzeigeeinrichtungen, wie beispielsweise Displays mit Multifunktionstasten zur Auslösung von Steuersignalen für den Traktor selbst oder für Jobrechner seitens der "Traktor-auswechselbaren Ausrüstung". Alternativ stehen im Regelfall auch die klassischen Stelleinrichtungen, wie handbetätigbare oder elektrisch betätigbare Wegeventile auf der seitlich vom Fahrersitz platzierten Steuerkonsole, als hydraulische Steuergeräte von Steuereinrichtungen an Bord des Traktors zur Verfügung. Diese Steuersignale können beispielsweise auch vom Steuerhebel - auch als Joy-Stick bezeichnet - aus betätigt werden. Die Wahl der Betätigungsart und der aktivierbaren Steuerelemente selbst ist dabei bei neuzeitlichen Traktoren dem Fahrer überlassen, der zwischen verschiedenen Optionen wählen kann.

Die Vielzahl der Steuerfunktionen und deren richtige Auswahl zum gegebenen Zeitpunkt im laufenden Arbeitsprozess fordern dem Fahrer viel Konzentration auf diese Steuervorgänge ab, welches ihm erhebliche ergonomische verursachte psychische Energien abfordert. Eine Möglichkeit, diese Anforderungen zu mindern, besteht in der Ausgestaltung von Steuersystem unter dem Begriff des sogenannten Head-land-managements, welches am Ende eines Feldes bei Erreichen des Vorgewendes bestimmte voreinstellbare Steuersequenzen automatisch ablaufen lässt.

EP 211 Die EP 1 044 591 A offenbart ein derartiges Head-land management als Funktionsmanaqementsystem, dessen Steuereinheit Mittel zur Ausführung eines Lernmodus insbesondere für das sogenannte Vorgewende aufweist. Die DE 199 43 561 offenbart einen Traktor, der die technischen Vorraussetzungen eines Head-land-management in Verbindung mit der Anwendung des klassischen landwirtschaftliches Bussystems (LBS) in Verbindung mit einem Jobrechner des Traktors und gegebenenfalls in Verbindung mit einem geräteseitigen Jobrechner beschreibt.

### Aufgabenstellung

Hier setzt die Aufgabe der Erfindung an, die sich das Ziel gesetzt hat, ergonomische Verbesserungen mit Bezug auf die Steuerung derartiger Maschinenkombinationen "Traktor-auswechselbare Ausrüstung" für den Fahrer zu schaffen. Primäres Ziel ist es dabei, dem Fahrer eine Steuerung an die Hand zu geben, die ihn kognitiv hinsichtlich der aufzubringenden Konzentration auf steuerungstechnische Aufgaben entlastet. Gleichzeitig soll dieses damit auch einen Beitrag zur Erhöhung der Arbeitssicherheit im Umgang mit diesen Maschinenkombinationen liefern.

### Lösung der Aufgabe

Gelöst wird die Aufgabe der Erfindung mit den kennzeichnenden Merkmalen des unabhängigen Anspruchs 1. Weitere vorteilhafte Ausgestaltungen der Erfindung sind den abhängigen Ansprüchen, der Beschreibung und den Figurendarstellungen zu entnehmen.

Das bedeutet, dass die Traktorgerätekombination zwei Steuermodi umfasst derart, dass mit dem einen Steuermodus wenigstens eine Antriebseinheit oder ein oder mehrere Stellantriebe entweder manuell über ein Bedienterminal und dessen Bedientasten software gestützt durch den geräteseitigen Jobrechner, oder alternativ mit den zweiten Steuermodus manuell über die Steuerventile bzw. deren Ventilscheiben des Steuerventilblocks der Arbeitshydraulik des Traktors betätigbar ist, wobei beide Steuerungsmodi verkettet und parallel aktiv geschaltet sind.

Die Erfindung sieht vor, die Vorteile der manuellen Handsteuerung einer Traktorhydraulik mit den Vorteilen einer auf Komplexität ausgerichteten Mikroprozessorsteuerung eines oder mehrerer Jobrechner einer auswechselbaren Ausrüstung derart zu kombinieren, dass es möglich ist, einen vorwählbaren mikroprozessorgesteuerten Steuerungsmodus einem manuell betätigbaren Bedienungselement der Handsteuerung der Traktorhydraulik zuzuordnen derart, dass dieser Steuerungsmodus diesem Bedienungselement in Selbsthaltung zugeordnet ist und somit durch die Betätigung dieses Bedienelementes der komplexe Steuervorgang ausgelöst werden kann. Die Zuordnung dieses Steuerungsmodus in Selbsthaltung in Bezug auf das Bedienelement der Traktorhydraulik bleibt solange aufrecht erhalten, bis ein anderer Steuerbefehl durch Betätigung eines Bedienelements des Steuerterminals der Mikroprozessorsteuerung ausgelöst wird, der damit zugleich die Selbsthaltung der Zuordnung des Steuermodus beendet.

Dieses bedeutet zugleich, dass die Steuerbefehle, die durch Bedienelemente des Steuerterminals der Mikroprozessorsteuerung ausgelöst werden, Priorität gegenüber den Steuerbefehlen, auslösbar im Selbsthaltungssteuermodus des Bedienungselements der Handsteuerung der Traktorhydraulik besitzen.

Dieser Wechsel der Steuermodi ist besonders dann von Vorteil, wenn es sich um auswechselbare Ausrüstungen mit großen Arbeitsbreiten handelt, wie dieses beispielsweise bei großen Erntemaschinen wie Mähwerken oder Schwadern der Fall ist, und die mehrteilige klappbare Arbeitseinheiten aufweisen, die von separaten Stellantrieben betätigt werden können, und die am Vorgewende ausgehoben und nach dem Rangieren im Vorgewende wieder in Arbeitsstellung verbracht werden müssen, so dass der Fahrer ständig wiederkehrende und gleiche Steuersequenzen durchführen muss.

Der erfindungsgemäße und damit verbundene ergonomische Vorteil für den Fahrer besteht darin, dass er seine Blickrichtung am Ende des Feldes nicht ständig wieder neu auf das Steuerterminal ausrichten und sich auf die Auswahl und Betätigung der entsprechenden Bedientasten konzentrieren muss, so dass sein Arm abgestützt auf der Steuerkonsole liegen kann und er somit den Kontakt zu dem Steuerelement der Traktorhydraulik aufrecht erhalten kann. Die Auswahl des richtigen Steuerelements der Traktorhydraulik kommt ihm ergonomisch allein schon dadurch entgegen, als dass sein geübter und trainierter Tastsinn ihm dabei sehr hilfreich entgegen kommt, da es sich bei dieser Art der Bedienung um in seinem Arbeitsumfeld täglich wiederkehrende quasi geräteunabhängige Wiederholungen von Bedienvorgängen handelt und welches die Bediensicherheit sehr unterstützt.

Die Erfindung beschränkt sich aber keineswegs nur auf die Steuerung der Aushebe- bzw. Absenkvorgänge am Feldende, sondern auch auf Steuerungsvorgänge im laufenden Betrieb zwischen den Vorgewenden, wie beispielsweise das Ausmähen von Restbeständen an Feldrändern, die nicht mehr mit allen zur Verfügung stehenden Mäheinheiten erfolgen können, weil sonst das bereits gemähte Grünfutter wieder von den Mäheinheiten erfasst wird und unnötigerweise zerkleinert und aufgewirbelt wird. Auch hier kommt es darauf an, eine ergonomisch verbesserte Situation dahingehend zu schaffen, dass der Fahrer mit geringstem steuerungstechnischen Aufwand in den möglichst bequemsten und sichersten Steuerungsmodus zurück findet.

Die Erfindung wird an dem nachfolgend erläuterten Ausführungsbeispiel "Traktor / auswechselbare Ausrüstung", wobei die auswechselbare Ausrüstung ein dreiteiliges Großflächenmähwerk mit mehreren Arbeitseinheiten darstellt, ausführlich beschrieben.

Es zeigen:
- Fig.1: vereinfachte Darstellung Traktor / mehrteiliges Vorsatzgerät mit Steuerungssystem in einer Draufsicht
- Fig.1a: vereinfachte Darstellung Traktor / mehrteiliges Vorsatzgerät gemäß Fig.1 mit hydraulischen Stellantrieben zum Betätigen der Arbeitseinheiten
- Fig.1b: vereinfachte Darstellung Traktor / mehrteiliges Vorsatzgerät gemäß Fig.1a mit hydraulischen Stellantrieben zum Betätigen der Arbeitseinheiten, wobei aus Gründen der Übersichtlichkeit die Arbeitseinheiten nicht mit dargestellt sind.
- Fig.2: symbolische Systemdarstellung Traktor / mehrteiliges Vorsatzgerät in der Grundstellung
- Fig.2a: Bedienterminal des mehrteiligen Vorsatzgerätes
- Fig.3: Steuerungssystem in der Ausgangssituation in Transportstellung
- Fig.4: Steuerungssystem im "Traktormodus" in der Arbeitsstellung befindlich
- Fig.5: zeigt die Schaltstellung der Steuerung in einer Arbeitsstellung, aus der heraus das Anheben der Arbeitseinheiten in die Vorgewendestellung gestartet werden soll
- Fig.6: zeigt die Schaltstellung der Steuerung in der erreichten Vorgewendestellung
- Fig.7: zeigt die Schaltstellung der Steuerung aus der Position der Vorgewendestellung heraus um die Arbeitseinheiten wieder in die Arbeitsstellung abzusenken
- Fig.8: zeigt die Schaltstellung der Steuerung in der Position alle Arbeitseinheiten wieder in Arbeitsstellung am Boden
- Fig.9: zeigt die Schaltstellung der Steuerung Start des Einzelaushubs der rechten Arbeitseinheit zur Überführung in die Vorgewendestellung
- Fig.10: zeigt die Schaltstellung der Steuerung in der Situation Einzelaushub der rechten Arbeitseinheit in der ausgehobenen Vorgewendestellung
- Fig.11: zeigt die Schaltstellung der Steuerung Start der übrigen Arbeitseinheiten in die Vorgewendestellung (rechte Einheit befindet sich bereits in der Vorgewendestellung) betätigt über die Ventilscheibe des Steuerblocks der Arbeitshydraulik
- Fig.12: zeigt die Schaltstellung der Steuerung in der Situation alle Mähwerke befinden sich in der Vorgewendestellung

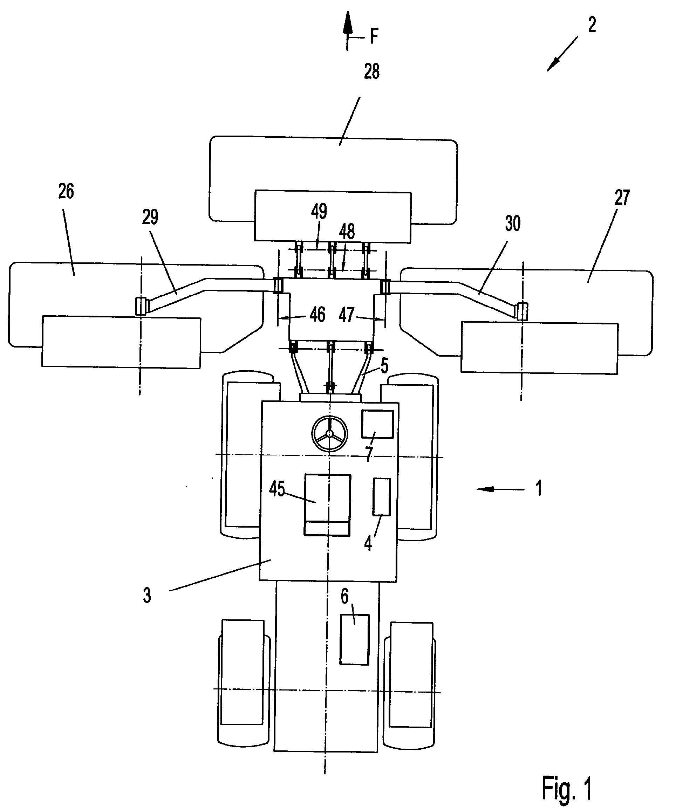

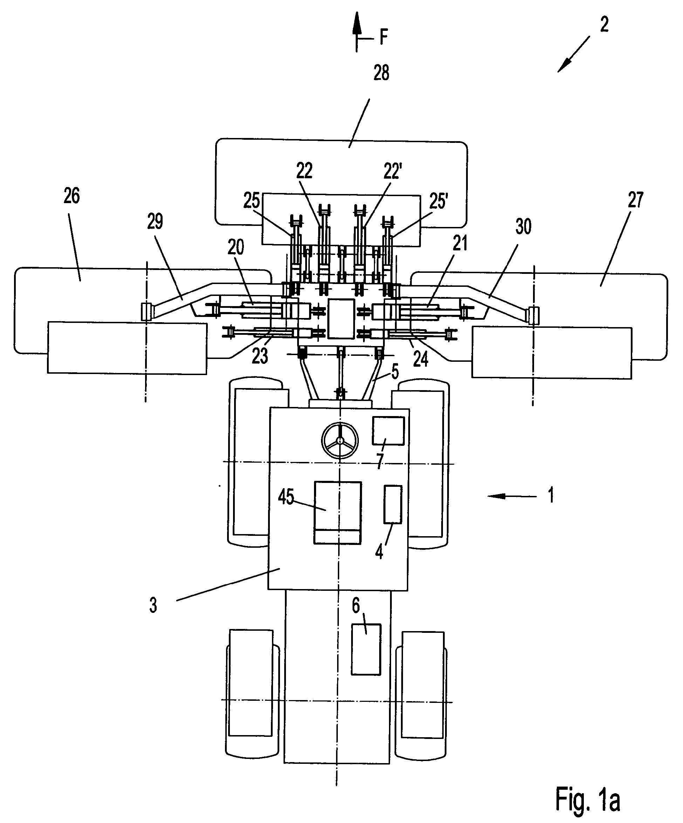

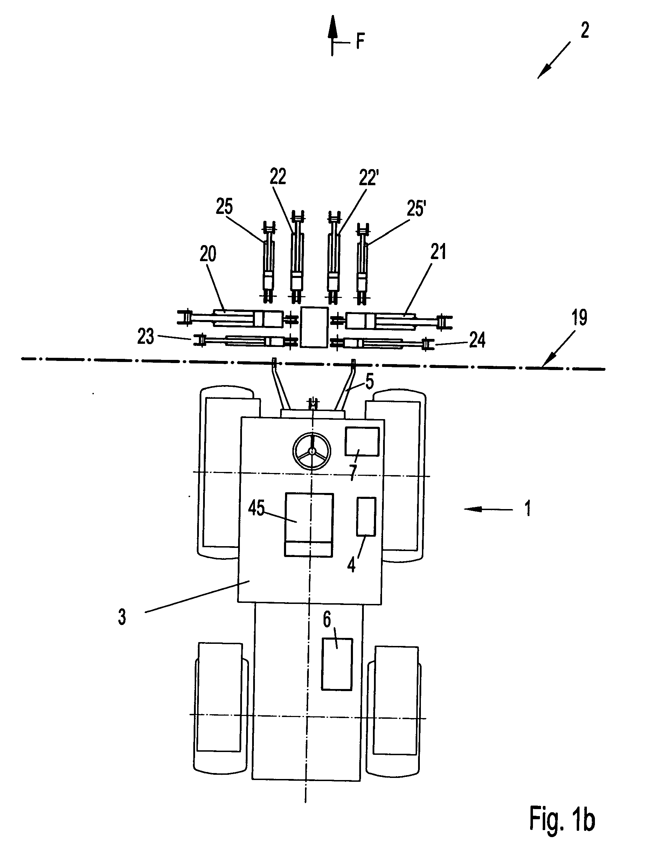

Fig.1 zeigt eine vereinfacht dargestellte Kombination^als Arbeitsmaschine 53 gebildet aus einem Traktor 1 und einer auswechselbaren Ausrüstung 2 mit drei Arbeitseinheiten 26,27,28 am Beispiel eines dreiteiligen Mähwerks in einer Draufsicht auf die Arbeitsebene, wobei in Fig.1 a die hydraulischen Stellantriebe zum Betätigen der Arbeitseinheiten mit dargestellt sind. Fig.1b zeigt gemäß Fig.1 a die hydraulischen Stellantriebe ausgebildet als Hydraulikzylinder 20,21,22,22',23,24,25,25') zum Betätigen der Arbeitseinheiten 26,27,28 isoliert betrachtet, wobei aus Gründen der Übersichtlichkeit die Arbeitseinheiten nicht mit dargestellt sind. Jede der Arbeitseinheiten 26,27,28 kann vom Boden aus der Arbeitsstellung heraus in an sich bekannter Weise entweder in eine Vorgewendestellung oder in eine Transportstellung für den Straßentransport angehoben bzw. verklappt werden. Die Vorgewendestellung ist eine Zwischenstellung zwischen der reinen Arbeitsstellung, bei der sich alle Arbeitseinheiten auf dem Erdboden abstützen und einer angehobenen Zwischenstellung, und der Transportstellung. Die Vorgewendestellung dient dazu, die Arbeitswerkzeuge außer Eingriff mit der ihr zugeordneten Arbeitsaufgabe zu nehmen, um am Feldende den Traktor zu wenden und ihn in die neue Fahrtrichtung zu manövrieren. Die beiden äußeren Arbeitseinheiten links bzw. rechts 26,27 werden an ihren Auslegerarmen 29,30 geführt, wobei die Auslegerarme 29,30 von Hydraulikzylindern 20,21 um Schwenkachsen 46,47 verklappbar sind und somit in ihre Vorgewende-, bzw. Transportstellung vom Erdboden abgehoben werden können. Analog kann auch die mittlere Arbeitseinheit 28 von einer Vorgewende- und Transportstellung nunmehr von den Hydraulikzylindern 22,22' und verschwenkbar um Schwenkachsen 48,49 vom Erdboden angehoben werden. Die äußeren Arbeitseinheiten links bzw. rechts 26,27 werden zusätzlich von vorgespannten Hydraulikzylindern 23,24 und die mittlere Arbeitseinheit 28 von vorgespannten Hydraulikzylindern 25,25' gewichtsentlastet und übernehmen damit eine Bodendruckentlastung zur Schonung des verbleibenden Grünfutterbestands am Boden. Die auswechselbare Ausrüstung 2 ist von dem Dreipunktkraftheber 5 als Schnittstelle 19 zwischen dem Traktor 1 und der auswechselbaren Ausrüstung 2 aufgenommen.

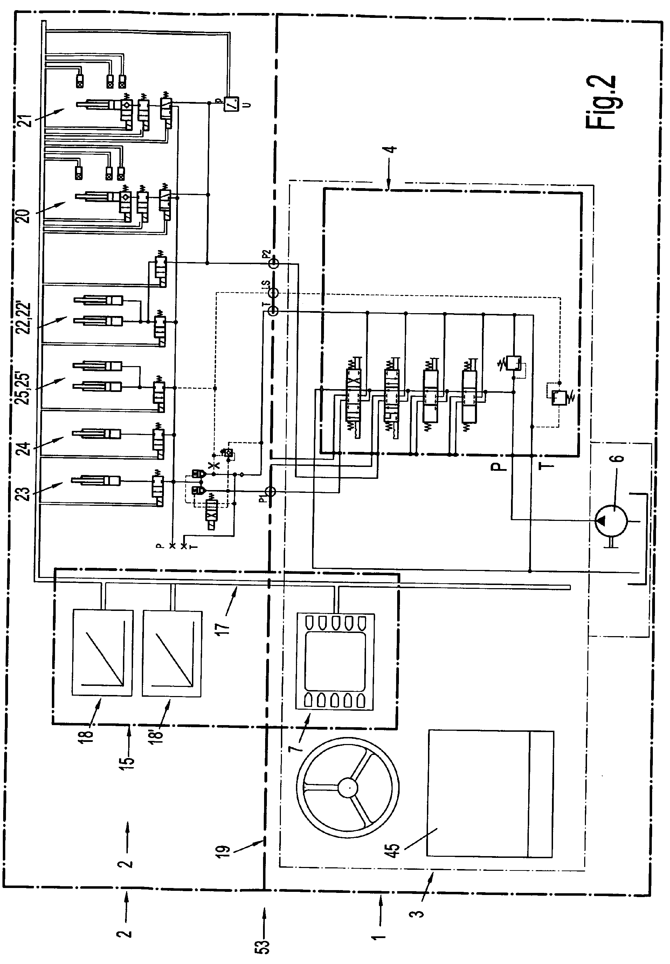

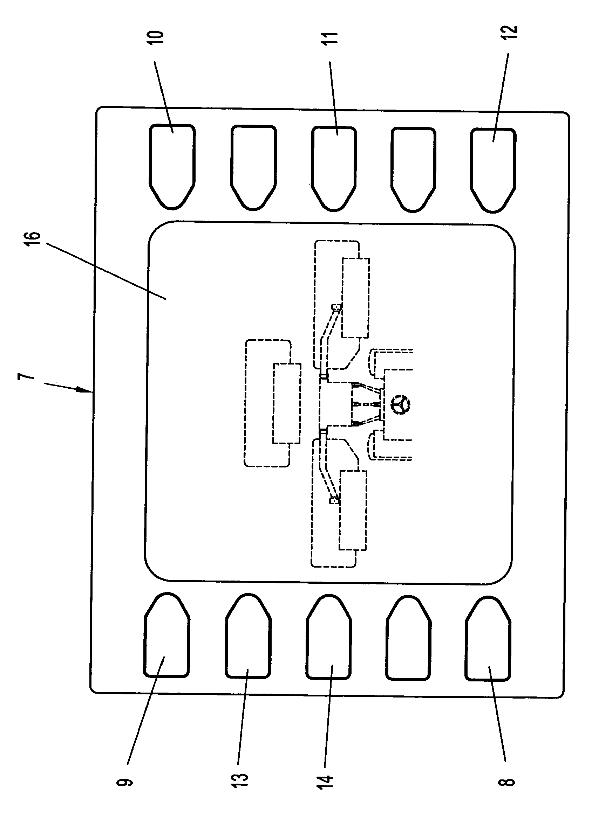

Fig.2 zeigt in einer symbolisierten Darstellung das System Traktor 1 / mehrteilige auswechselbare Ausrüstung 2 als Gesamtmaschine 53 in seiner Grundstellung, d.h. keines der Steuerelemente der Steuerung Traktor 1 / mehrteilige auswechselbare Ausrüstung 2 ist aktiviert und alle Bedien- und Steuerelemente befinden sich im nichtbetätigten Zustand.

Der Traktor 1 als mobile Antriebs- und Energiequelle zur Aufnahme der auswechselbaren Ausrüstung 2 beinhaltet die Fahrerkabine 3 als Steuerstand des Fahrers, der gemäß der EN ISO 12100 auch gleichzeitig der Benutzer der Maschine - in diesem konkreten Fall die Kombination Traktor 2 / auswechselbare Ausrüstung 1 - ist und den es insbesondere vor Risiken, die von potentiellen Gefahrenquellen ausgehen können, zu schützen gilt,

Der Fahrer befindet sich während des Betriebs und der Transportfahrt innerhalb der Fahrerkabine 3 auf seinem Fahrersitz 45. Die Fahrerkabine 3 ist zugleich der Steuerstand Gesamtmaschine Traktor/auswechselbare Ausrüstung und auf diesem befinden sich demzufolge auch die Bedienelemente der beiden Steuersysteme 4,15, nämlich die Bedienelemente Ventilscheiben 31,32 des Steuerblocks 4 der Arbeitshydraulik und das Bedienterminal 7 mit seinen Funktionstasten 9,10,11,12,13,14,15 der Jobrechnersteuerung 15.

Somit befinden sich in unmittelbarer Nähe des Fahrers einerseits der Block der Handsteuerventile 4 der Arbeitshydraulik für die auswechselbare Ausrüstung 2, und anderseits das Bedienterminal 7 mit seinen Funktionstasten 9,10,11,12,13,14,15 und seiner optischen Anzeige 17 ausgeführt als Display, wie in Fig. 2a vergrößert dargestellt, wobei beide Steuerungen 4,15 was die Aktoren und die Stellantriebe der auswechselbaren Ausrüstung betrifft, auf die Arbeitshydraulik mit der Hydraulikpumpe 6 des Traktors 1 zurück greifen.

An Bord des Traktors 1 befindet sich auch die Hydraulikpumpe 6 zur Druckölversorgung der Arbeitshydraulik, die über die Druckleitung P, der Tankrücklaufleitung T, und den Ventilscheiben 31,32 des Handsteuerventilblocks 4 und den Zapfstellen P1,P2,T an der Schnittstelle 19 mit den elektromagnetisch betätigten Wegeventilen 33,34,34',35,35',36,36'37,37', die Bestandteil der auswechselbaren Ausrüstung 2 sind und die zur Steuerung der Hydraulikzylinder 20,21,22,22',23,24,25,25' dienen, verbunden ist.

Des weiteren umfasst die auswechselbare Ausrüstung 2 wenigstens einen geräteseitigen Job-Rechner 18 , der über einen Feldbus 17, vorzugsweise einem ISO-Bus, mit dem Bedienterminal 7 und den elektrisch betätigbaren Wegeventilen 33,34,34',35,35',36,36'37,37' verbunden ist. Vorteilhaft ist es insbesondere aus Gründen der Sicherheit die auswechselbare Ausrüstung 2 mit wenigstens zwei Job-Rechnern 18,18' auszurüsten, welche sich gegenseitig im Hinblick auf ihre Funktionssicherheit überprüfen und die zudem redundant zueinander ausgelegt sein können, welches die Funktionssicherheit und damit den Diagnose Deckungsgrad im Falle eines Ausfalls einer der elektronischen Komponente erhöht.

Die erfindungsgemäße Steuerung ist so gestaltet, dass diese als Duo-Modus-Steuerung ausgelegt ist. Das bedeutet, dass die Traktorgerätekombination 50 wenigstens zwei Steuermodi umfasst derart, dass mit dieser Steuerung einerseits wenigstens eine Antriebseinheit oder Stellantriebe 20,22,22',23,24,25,25' entweder über das Bedienterminal 7 und dessen Bedientasten 8,9,10,11,12,13,14,15 software gestützt durch den geräteseitigen Jobrechner 18,18' oder alternativ manuell über die Steuerventile im Hand-Betrieb über die Ventilscheiben 31,32 des Steuerventilblocks 4 der Arbeitshydraulik des Traktors betätigbar ist, wobei beide Steuerungsmodi parallel aktiv geschaltet sind.

Dabei gilt das Prinzip, dass beide Steuermodi gleichberechtig nebeneinander scharf geschaltet sind. Dabei können die Ventilscheiben 31,32 selber auch elektrisch betätigbar sein, wobei dieses je nach Ausrüstungsstand eines Traktors beispielsweise auch von einem Joy-Stick angesteuert werden können.

Ausschlaggebend für den Steuermodus Arbeitshydraulik-Ventilblock ist, dass der Fahrer zum Auslösen der wesentlichen Steuerbefehle während der Arbeitsfahrt auf die Steuerelemente des Traktors zurück greifen kann und dabei die steuernde Hand des Fahrers stets in der Nähe dieser Steuerelemente verbleiben kann, ohne dass er sein Augenmerk auf die Bedientasten des Bedienterminals richten muss. Dabei ist die Steuerung im Steuermodus Arbeitshydraulik-Ventilblock so ausgestaltet, dass zumindest ein geräteseitiger Jobrechner 18,18' in den Ablauf und die Überwachung der handausgelösten Steuerbefehle über zumindest eine der Ventilscheiben 31,32 steuerungstechnisch mit einbezogen ist. Dieses ist insofern von besonderem ergonomischem Vorteil für den Fahrer, als dass dieser dann auf der Ebene des alltäglich Geübten und Trainierten im Unterbewusstsein verankerten Handelns bleibt, welches es ihm ermöglicht, seine Aufmerksamkeit auxsiliar auf sein Umfeld zu richten um Fehlbedienungen im Steuerungstechnischen zu vermeiden, welches zudem auch ein Beitrag zur Risikominderung im Umgang mit Maschinen im Sinne der EG-Maschinenrichtlinie darstellt.

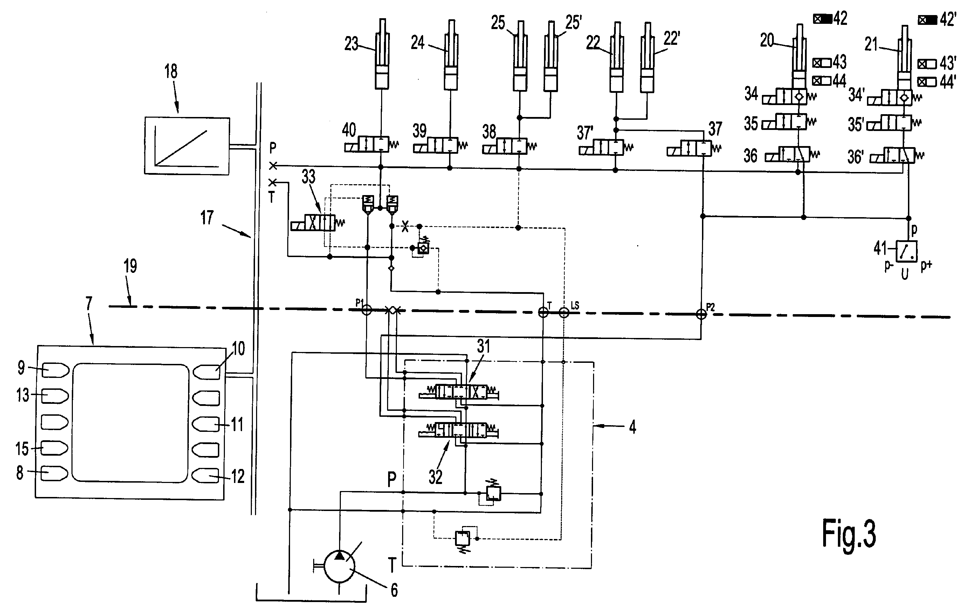

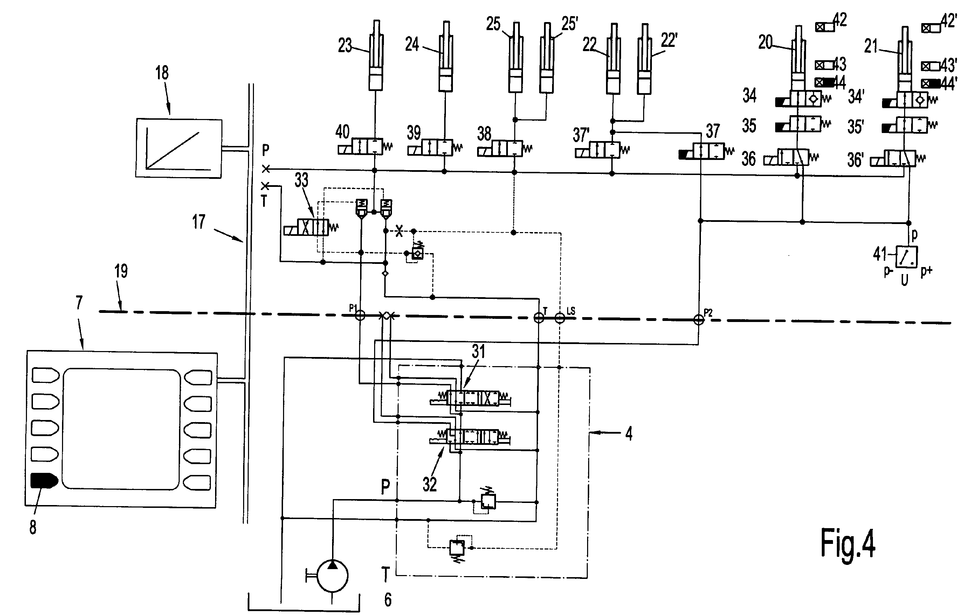

Fig.3 zeigt das Steuerungssystem in der Ausgangssituation in Transportstellung, also in der Stellung, die sich ergibt, wenn das Feld nach einer Fahrt auf öffentlichen Wegen erreicht wird. Die außenliegenden Arbeitseinheiten befinden sich hochgeklappt in der Transportstellung, so dass die oberen Lagesensoren 42,42' diese Ausgangsstellung detektieren und dem Jobrechner 18 diesen Zustand melden. Zunächst wird die Ventilscheibe 31 so in Schaltstellung gebracht wie in Fig. 4 dargestellt, damit das Gesamtsystem der Steuerung mit Drucköl versorgt werden kann. Dabei bleibt die Ventilscheibe 31 in Selbsthaltung verriegelt, so das damit der Modus Arbeitstellung hergestellt ist, solange die Ventilscheibe 31 in dieser Verasteten Stellung bleibt.

Durch anschließende Betätigung der Taste 8, der eigentlichen Starttaste der Bedienterminals 7, wird dem Jobrechner 18 das Eingangssignal zur Ansteuerung der Wegeventile 34,34'35,35',37 gesetzt, so dass diese auf Durchgang geschaltet werden und die Kolbenstangen der Hydraulikzylinder 20,21,22,22' infolge der Gewichtskräfte der Arbeitseinheiten 26,27,28 in ihr Zylindergehäuse einfahren können und das Hydrauliköl durch die Verdrängung der einfahrenden Kolbenstangen zurück in den Tank der Traktorhydraulik fließen kann, wodurch die Arbeitseinheiten ihre Arbeitsstellung, wie in Fig.4 dargestellt, einnehmen können. Die erreichte Arbeitsstellung wird von den Lagesensoren 44,44' detektiert, die ihren Zustand als high-Signal und Eingangssignale dem Jobrechner 18 melden. Durch Betätigung der Bedientaste 8 wird am Jobrechner dieses Eingangssignal in Selbsthaltung angelegt und solange gespeichert, bis durch die Bedientaste 14 das Ende der Arbeitsteilung herbei geführt wird, und welches verursacht, das die Arbeitseinheiten aus der Arbeitsstellung wieder zurück in die Transportstellung übergehen. Der jeweilige Zustand der Arbeitseinheiten kann über eine optische Anzeige 16 (Display) dem Fahrer zusätzlich visualisiert mitgeteilt werden.

Somit sind beide Steuerungssysteme 4,15, zum Einen ausgebildet als Steuerblock 4 mit wenigstens zwei Ventilscheiben C, und zum Anderen ausgebildet als Jobrechnersteuerung 15, basierend auf die mikroprozessorgesteuerten Jobrechners 18,18', steuerungstechnisch miteinender vernetzt und parallel zueinander aktiv geschaltet sind.

Die Vernetzung und Parallelschaltung beider Steuersysteme 4,15 erfolgt einerseits über die Ventilscheiben 18,18' der Arbeitshydraulik und anderseits über die elektrisch ansteuerbare Wegeventile 33,34,34',35,35',36,36'37,37' sowie den Lagesensoren 42,42',43,43',44 und dem Drucksensor 41, welche dem Jobrechner 18,18' Auskunft über den momentanen Zustand der auswechselbaren Ausrüstung 2 geben. Dabei sind beide Steuersysteme im Arbeitmodus unabhängig voneinander stets aktiv geschaltet und unabhängig voneinander betätigbar.

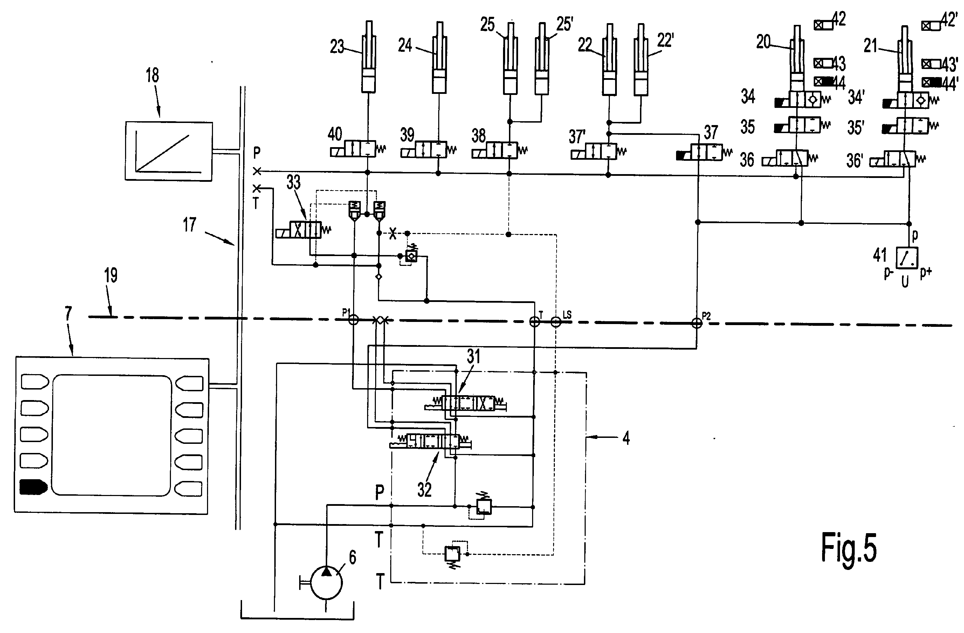

Die Figuren Fig.5 bis Fig.12 zeigen beispielhaft einige Steuerungsituationen, die das parallel steuerungssytem beispielhaft näher erleutert:

In Fig.5 ist die Schaltstellung der Steuerung in der Arbeitsstellung, aus der heraus das Anheben der Arbeitseinheiten in die Vorgewendestellung gestartet werden soll, dargestellt. Dieses Ausheben kann alternativ entweder durch Betätigen der entsprechenden Bedientaste 13 am Bedienterminal 7 oder durch Betätigen der Ventilscheibe 32 ausgeführt werden. Im dargestellten Beispiel wird die Ventilscheibe 32 betätigt, welches durch die geänderte Ventilstellung verdeutlicht wird. In allen Darstellungen der nachfolgenden Fig. 5 bis Fig.12 bedeuten die geschwärzten Flächen an den Ventilen und Lagesensoren, dass sie sich im erregten Zustand befinden. Alle übrigen Wegeventile sind ebenfalls gegenüber ihren nicht erregten Ventilstellungen entsprechend geschwärzt und in ihrer jeweiligen erregten Stellung dargestellt. Von ausschlaggebender Bedeutung für den Zustand der Steuerung ist auch der Drucksensor 41, der zwischen einem Niedrigdruck p- und einem hohen Druck p+ unterscheiden kann. Es kann sich dabei um einen einfachen Druckschalter handeln oder aber auch um einen busfähigen Sensor, der seinen Druckzustand an den Eingang des Jobrechners anlegen kann.

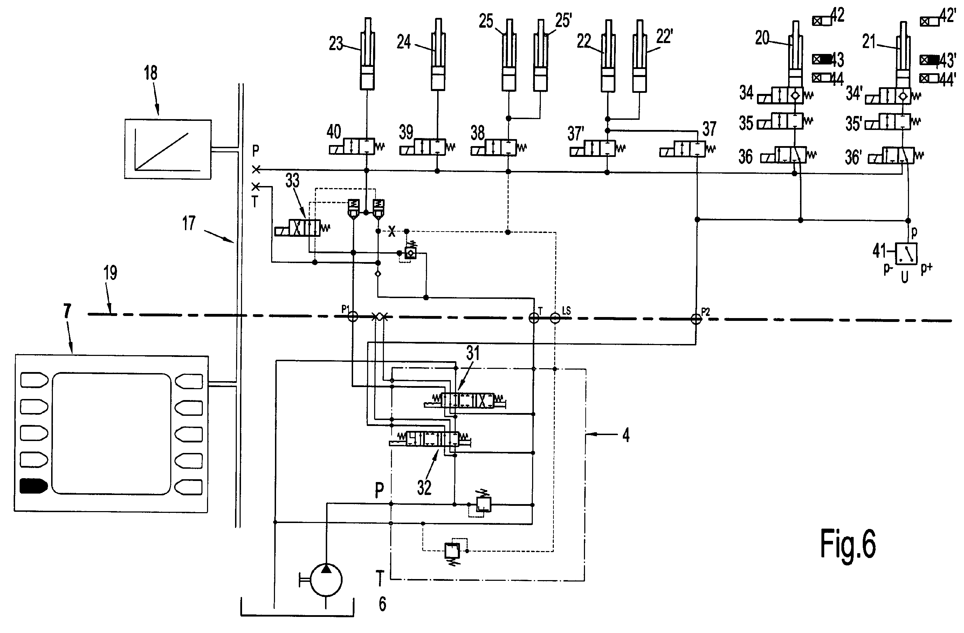

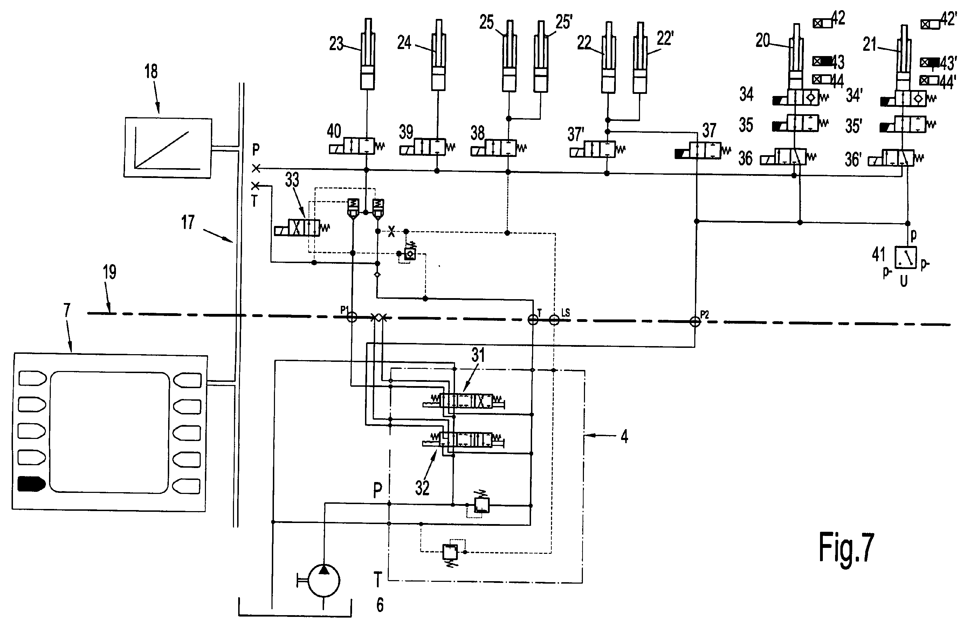

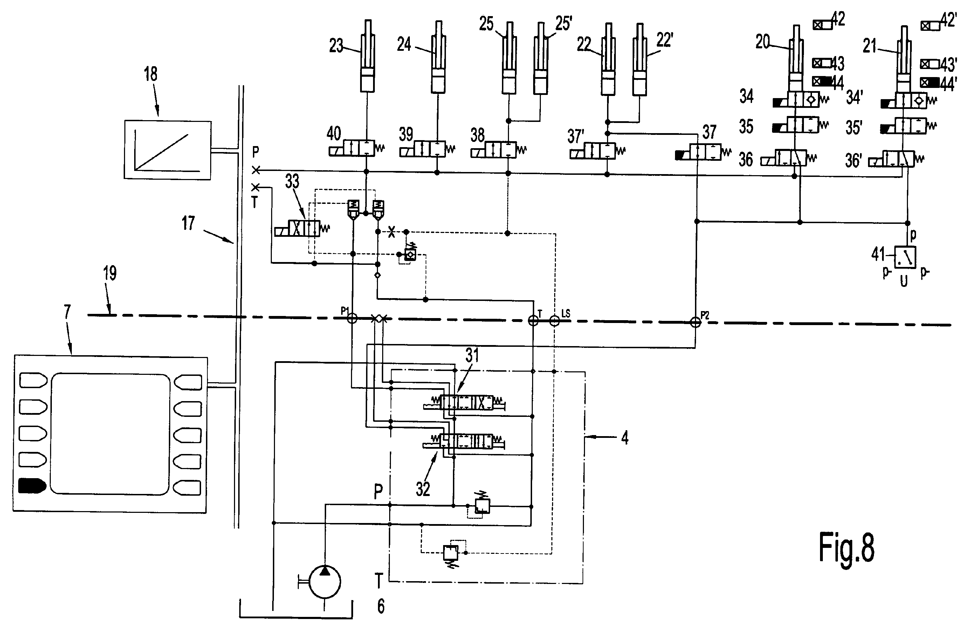

Fig.6 zeigt die Schaltstellung der Steuerung in der erreichten Vorgewendestellung und Fig.7 zeigt die Schaltstellung der Steuerung aus der Position der Vorgewendestellung heraus um die Arbeitseinheiten wieder in die Arbeitsstellung abzusenken. Fig. 8 zeigt die Schaltstellung der Steuerung wieder zurückgeführt in der Position alle Arbeitseinheiten in Arbeitsstellung am Boden. Diese Operationen sind in den dargestellten Ausführungsbeispielen ausschließlich durch Betätigung der Ventilscheibe 32 herbeigeführt worden, weil durch die Aktivierung oder Deaktivierung der Lagesensoren in Verbindung mit dem Drucksensor dem Jobrechner mitgeteilt wird, in welchem Steuerungszustand sich das Steuerungssystem befindet und wodurch der Jobrechner (18,18') aufgrund seiner Software automatisch die entsprechenden elektrisch angesteuerten Ventile entsprechend schaltet. Alternativ können die gleichen Steuerbefehle auch von den Bedientasten des Terminals erzeugt werden, so dass auch in diesem Fall der Jobrechner (18,18') die entsprechenden elektrisch angesteuerten Ventile entsprechend schaltet und die entsprechenden Stellantriebe dadurch in Gang setzt.

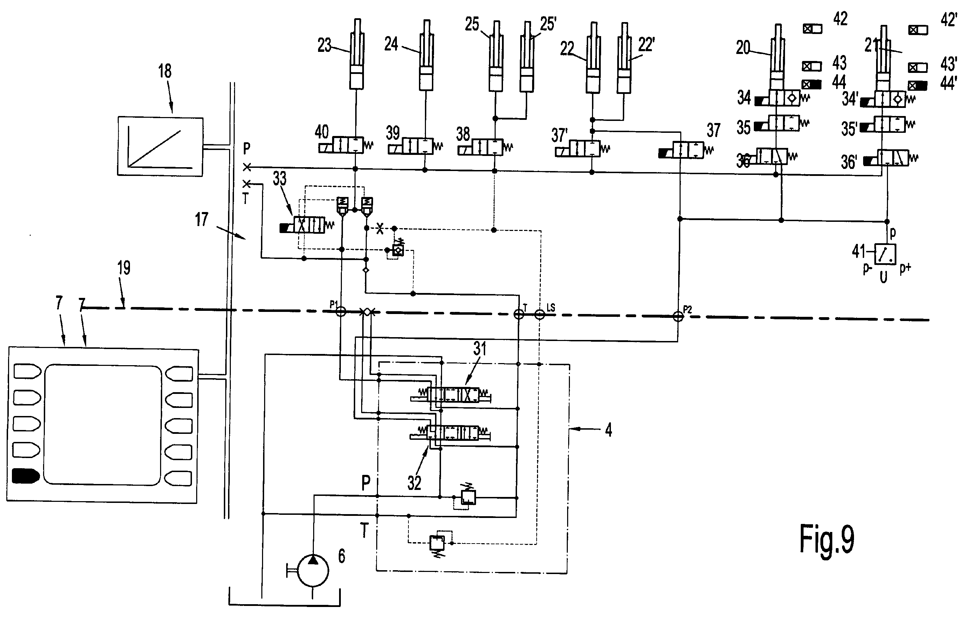

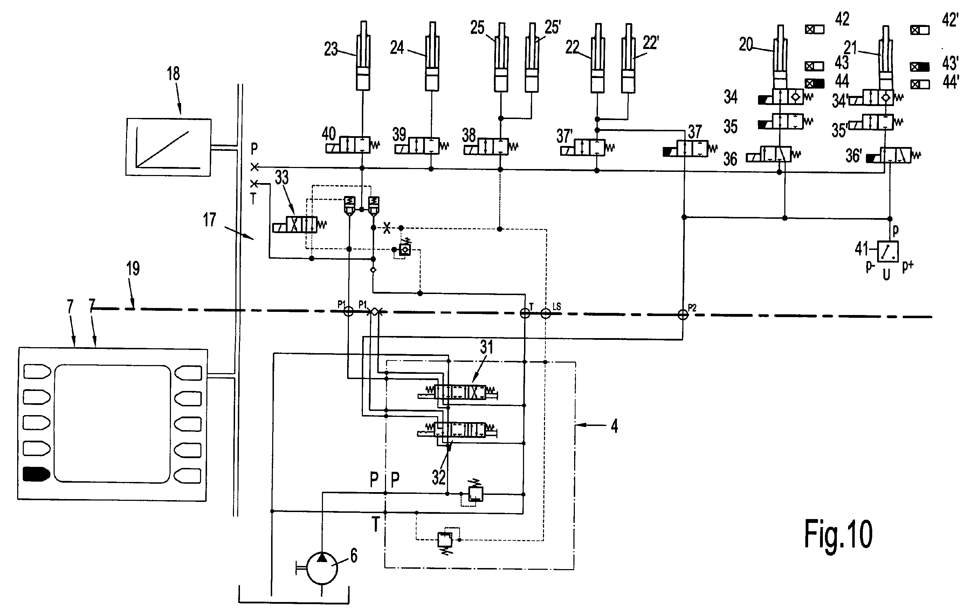

Fig.9 zeigt die Schaltstellung der Steuerung Start des Einzelaushubs der rechten Arbeitseinheit 27 zur Überführung in die Vorgewendestellung, welche durch einen Druck der Bedientaste 10 an dem Bedienterminal 7 ausgelöst wird. Nach Erreichen der Vorgewendestellung bzw. des Lagesensors 43' wird der Aushub automatisch gestoppt. Fig.10 zeigt die Schaltstellung der Steuerung in der Situation Einzelaushub der rechten Arbeitseinheit in der ausgehobenen Vorgewendestellung. Eine solche Operation kann z.B. erforderlich sein, um ein Hindernis zu überfahren.

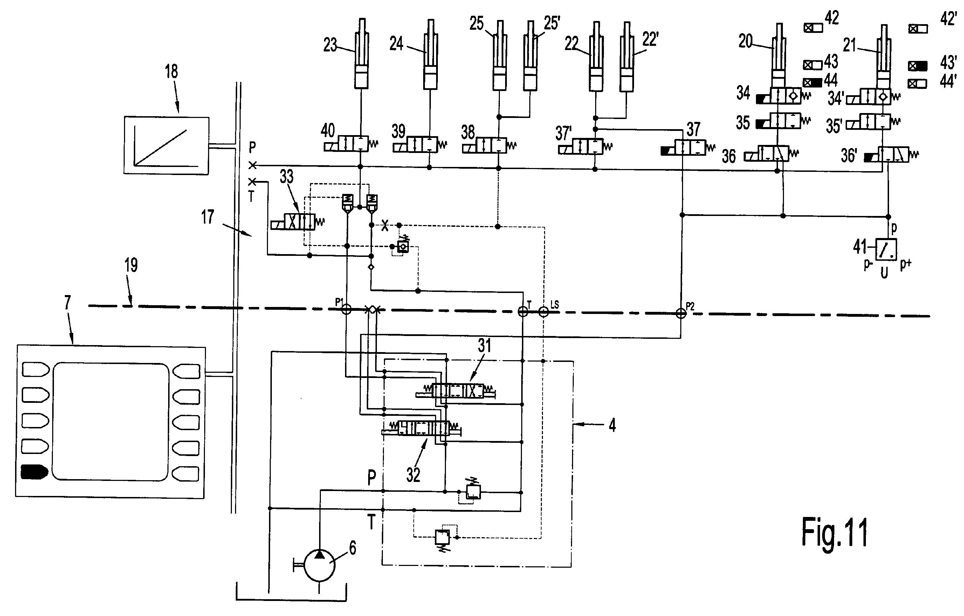

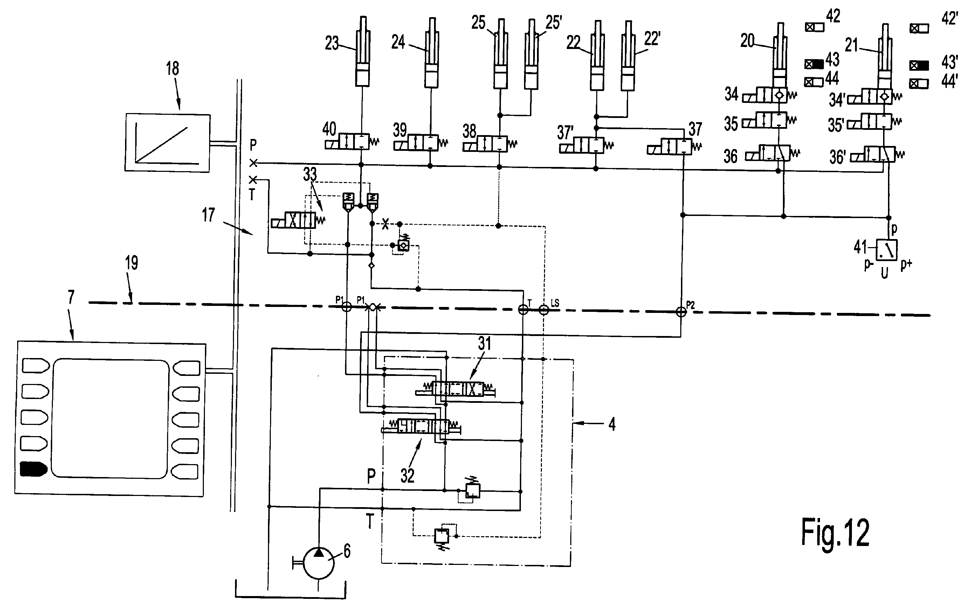

Fig.11 zeigt die Schaltstellung der Steuerung Start der übrigen Arbeitseinheiten 26,28 in die Vorgewendestellung, wobei sich die rechte Einheit 27 bereits in der Vorgewendestellung, wie unter Fig.9 und Fig.10 beschrieben, befindet. Betätigt wird die Auslösung dieses Steuerbefehls durch die Ventilscheibe 32 des Steuerblocks 4 der Arbeitshydraulik. Alternativ könnte auch wiederum die Bedientaste 13 des Bedienterminals 7 betätigt werden, die den gleichen Steuervorgang auslösen kann. Bei erreichen der Vorgewendestellung schalten sich wiederum die elektrisch betätigen Ventile ab, die zum Halten der Arbeitseinheiten in dieser Position gesperrt sein müssen. Fig.12 zeigt diese Schaltstellung der Steuerung in der Situation alle Mähwerke befinden sich in der Vorgewendestellung.

In die Arbeitsstellung zurück abgesenkt werden können die Arbeitseinheiten wiederum wahlweise, entweder durch Betätigung der Ventilscheibe 32 in die entsprechende Stellung, oder eben auch alternativ durch Betätigung der Bedientaste 11 des Bedienterminals 7.

Gleichermaßen stellt die beschriebenen Steuerung auch ein Verfahren zur Steuerung der Gesamtmaschine Traktor/auswechselbare Ausrüstung dar.

### Bezugszeichenliste

- 1: Traktor
- 2: auswechselbare Ausrüstung
- 3: Fahrerkabine
- 4: Steuerventilblock
- 5: Dreipunktkraftheber (Heckhubwerk)
- 6: Hydraulikpumpe
- 7: Bedienterminal
- 8: Bedientaste - Arbeitsmodus
- 9: Bedientaste - linke Arbeitseinheit aufwärts
- 10: Bedientaste - rechte Arbeitseinheit aufwärts
- 11: Bedientaste - mittlere Arbeitseinheit aufwärts
- 12: Bedientaste - alle Arbeitseinheiten abwärts
- 13: Bedientaste - alle Arbeitseinheiten aufwärts
- 14: Bedientaste - Ende (alle Arbeitseinheiten in Transportstellung aufwärts)
- 15: Jobrechnersteuerung
- 16: optische Anzeige (Display)
- 17: Feldbus
- 18,18': geräteseitiger Jobrechner
- 19: Schnittstelle Traktor- auswechselbaren Ausrüstung
- 20: Hydraulikzylinder links
- 21: Hydraulikzylinder rechts
- 22,22': Hydraulikzylinder mittig
- 23: Hydraulikzylinder Auflagedruckentlastung links
- 24: Hydraulikzylinder Auflagedruckentlastung rechts
- 25,25': Hydraulikzylinder Auflagedruckentlastung mittig
- 26: Arbeitseinheit links
- 27: Arbeitseinheit rechts
- 28: Arbeitseinheit mittig
- 29: Auslegerarm links
- 30: Auslegerarm links
- 31: Ventilscheibe
- 32: Ventilscheibe
- 33: Vorschaltventil
- 34,34': Wegeventil
- 35,35': Wegeventil
- 36,36': Wegeventil
- 37,37': Wegeventil
- 38: Wegeventil
- 39: Wegeventil
- 40: Wegeventil
- 41: Drucksensor
- 42,42': Lagesensor
- 43,43': Lagesensor
- 44,44': Lagesensor
- 45: Fahrersitz
- 46: Schwenkachse
- 47: Schwenkachse
- 48: Schwenkachse
- 49: Schwenkachse
- 50: Traktorgerätekombination
- 51: zwei-Modi-Steuerung
- 52:
- 53: Gesamtmaschine

## Patentansprüche

1. r Verfahren zum Betrieben einer Steuerung für eine Traktorgerätekombination (1, 2) mit wenigstens einer auswechselbarer Ausrüstung (2), welche zusammenwirkend eine landwirtschaftliche Arbeitsmaschine ergeben, wobei der Traktor (1) eine Arbeitshydraulik mit wenigstens einer Steuerung, ausgebildet als Steuerblock (4) mit wenigstens zwei Wegeventilen bzw. zwei Ventilscheiben (31, 32) aufweist, wobei die auswechselbare Ausrüstung (2) über wenigstens eine hydraulischen Zapfstelle mit der Arbeitshydraulik des Traktors (1) kuppelbar ist, und wobei die auswechselbare Ausrüstung (2) eine Steuerung (15) als mikroprozessorgesteuerten Jobrechner (18, 18') aufweist die mit einer Bedieneinheit (7) fernbedienbar aus der Fahrerkabine (3) des Traktors (1) heraus verbunden ist, wobei die Steuerbefehle zur Steuerung der Auswechselbaren Ausrüstung (2) entweder von der Bedieneinheit (7) oder von dem Steuerblock (4) ausgegeben werden können, welche auf Aktoren, und/oder Antriebseinheiten und/oder Stellantriebe der auswechselbarer Ausrüstung (2) einwirken, **dadurch gekennzeichnet, dass** die Traktorgerätekombination (50) eine Zwei-Modi-Steuerung (51) mit zwei Steuermodi umfasst derart, dass wenigstens eine Antriebseinheit oder ein oder mehrere Stellantriebe mit dem einem Steuermodus manuell über ein Bedienterminal (7) und dessen Bedientasten (9,10,11,12,13) softwaregestützt durch den geräteseitigen Jobrechner (18,18'), oder alternativ mit dem zweiten Steuermodus manuell über die Steuerventile bzw. deren Ventilscheiben (31,32) des Steuerventilblocks (4) der Arbeitshydraulik des Traktors (1) betätigbar ist, wobei beide Steuerungsmodi verkettet und parallel aktiv geschaltet sind, wobei die manuelle Handsteuerung einer Traktorhydraulik mit der auf Komplexität ausgerichteten Mikroprozessorsteuerung eines oder mehrerer Jobrechner (18,18') einer auswechselbaren Ausrüstung derart kombiniert sind, dass es möglich ist, einen vorwählbaren mikroprozessorgesteuerten Steuerungsmodus einem manuell betätigbaren Bedienungselement der Handsteuerung der Traktorhydraulik zuzuordnen, so dass dieser Steuerungsmodus diesem Bedienungselement in Selbsthaltung zugeordnet ist, wobei durch die Betätigung dieses Bedienelementes der komplexe Steuervorgang ausgelöst werden kann, wobei die Zuordnung dieses Steuerungsmodus in Selbsthaltung in Bezug auf das Bedienelement der Traktorhydraulik solange aufrecht erhalten bleibt, bis ein anderer Steuerbefehl durch Betätigung eines Bedienelements des Bedienterminal (7) der Mikroprozessorsteuerung ausgelöst wird, der damit zugleich die Selbsthaltung der Zuordnung des Steuermodus beendet.

2. Verfahren nach Anspruch 1, **dadurch gekennzeichnet, dass** beide Steuerungssysteme (4,15), die der Arbeitshydraulik, ausgebildet als Steuerblock (4) mit wenigstens zwei Ventilscheiben (31,32), und die der Jobrechnersteuerung (15) mit wenigstens einem geräteseitigen Jobrechners (18,18') parallel zueinander betreibbar sind, wobei beide Steuersysteme (4,15) steuerungstechnisch miteinender vernetzt und parallel zueinander aktiv geschaltet sind.

3. Verfahren nach Anspruch 1, **dadurch gekennzeichnet, dass** die Vernetzung beider Steuersysteme (4,15) einerseits über die Ventilscheiben (31,32) der Arbeitshydraulik des Traktors (1) und anderseits über elektrisch ansteuerbare Wegeventile (34,34',35,35',37,37;38,39,40), wenigstens einem Lagesensor (42,42',43,43',44) und wenigstens einem Drucksensor (41) erfolgt.

4. Verfahren nach Anspruch 1, **dadurch gekennzeichnet, dass** die Parallelschaltung beider Steuersysteme (4,15) einerseits über die Ventilscheiben (31,32) der Arbeitshydraulik des Traktors (1) und anderseits über elektrisch ansteuerbare Wegeventile (34,34',35,35',37,37;38,39,40), wenigstens einem Lagesensor (42,42',43,43',44) und wenigstens einem Drucksensor (41) erfolgt.

5. Verfahren nach Anspruch 1, **dadurch gekennzeichnet, dass** beide Steuersysteme (4,15) im Arbeitmodus unabhängig voneinander stets aktiv geschaltet sind.

6. Verfahren nach Anspruch 1, **dadurch gekennzeichnet, dass** die Steuerung ein Bedienterminal (7) umfasst.

7. Verfahren nach Anspruch 1, **dadurch gekennzeichnet, dass** das Bedienterminal (7) Teil der auswechselbaren Ausrüstung (2) ist.

8. Verfahren nach Anspruch 1, **dadurch gekennzeichnet, dass** das Bedienterminal (7) Teil der Ausrüstung des Traktors (1) ist.

9. Verfahren nach Anspruch 1, **dadurch gekennzeichnet, dass** Steuerung einen Feldbus (17) umfasst.

10. Verfahren nach Anspruch 1, **dadurch gekennzeichnet, dass** Steuerung (4,15) wenigstens einen Drucksensor (41) umfasst, welcher wenigstens ein Eingangssignal für den Jobrechner (18,18') erzeugt.

11. Verfahren nach Anspruch 1, **dadurch gekennzeichnet, dass** Steuerung (4,15) wenigstens einen Lagesensor (42,42',43,43',44.44') umfasst, welcher wenigstens ein Eingangssignal für den Jobrechner (18,18') erzeugt.

12. Verfahren nach Anspruch 1, **dadurch gekennzeichnet, dass** die auswechselbarer Ausrüstung (2) ein Mähwerk mit wenigstens zwei Arbeitseinheiten (26,27) umfasst.

## Claims

1. A method of operating a control system for a tractor-implement combination (1, 2) comprising at least one interchangeable equipment item (2), which in cooperating relationship afford an agricultural working machine, wherein the tractor (1) has a working hydraulic system having at least one control means in the form of a control block (4) with at least two directional control valves or two valve disks (31, 32), wherein the interchangeable equipment item (2) can be coupled by way of at least one hydraulic power take-off to the working hydraulic system of the tractor (1) and wherein the interchangeable equipment item (2) has a control means (15) in the form of a microprocessor-controlled job computer (18, 18') which is connected to an operating unit (7) remotely controllably from the driving cab (3) of the tractor (1), wherein the control commands for control of the interchangeable equipment item (2) can be output either by the operating unit (7) or by the control block (4) which act on actuators and/or drive units and/or adjustment drives of the interchangeable equipment item (2), **characterised in that** the tractor-implement combination (50) includes a dual-mode control system (51) having two control modes in such a way that at least one drive unit or one or more adjusting drives is actuable with the one control mode manually by way of an operating terminal (7) and its operating keys (9, 10, 11, 12, 13) in software-supported fashion by the implement-side job computer (18, 18') or alternatively with the second control mode manually by way of the control valves or their valve disks (31, 32) of the control valve block (4) of the working hydraulic system of the tractor (1), wherein both control modes are connected in linked and parallel active relationship, wherein the manual hand control of a tractor hydraulic system is combined with the microprocessor control adapted for complexity of one or more job computers (18, 18') of an interchangeable equipment item in such a way that it is possible for a preselectable microprocessor-controlled control mode to be associated with a manually actuable operating element of the hand control of the tractor hydraulic system so that said control mode is associated with said operating element in self-holding relationship, wherein the complex control process can be triggered by the actuation of said operating element, wherein the association of said control mode in self-holding relationship in relation to the operating element of the tractor hydraulic system remains maintained until another control command is triggered by actuation of an operating element of the operating terminal (7) of the microprocessor control system which thus at the same time terminates the self-holding action in respect of the association of the control mode.

2. A method according to claim 1 **characterised in that** both control systems (14, 15), those of the working hydraulic system, in the form of a control block (4) with at least two valve disks (31, 32), and those of the job computer control (15) with at least one implement-side job computer (18, 18'), are operable in mutually parallel relationship, wherein both control systems (4, 15) are linked together in control-technology relationship and are connected actively in mutually parallel relationship.

3. A method according to claim 1 **characterised in that** the linking of both control systems (4, 15) is effected on the one hand by way of the valve disks (31, 32) of the working hydraulic system of the tractor (1) and on the other hand by way of electrically controllable directional control valves (34, 34', 35, 35', 37, 37'; 38, 39, 40), at least one position sensor (42, 42', 43, 43', 44) and at least one pressure sensor (41).

4. A method according to claim 1 **characterised in that** the parallel connection of both control systems (4, 15) is effected on the one hand by way of the valve disks (31, 32) of the working hydraulic system of the tractor (1) and on the other hand by way of electrically controllable directional control valves (34, 34', 35, 35', 37, 37'; 38, 39, 40), at least one position sensor (42, 42', 43, 43', 44) and at least one pressure sensor (41).

5. A method according to claim 1 **characterised in that** in the working mode both control systems (4, 15) are always actively connected in mutually independent relationship.

6. A method according to claim 1 **characterised in that** the control system includes an operating terminal (7).

7. A method according to claim 1 **characterised in that** the operating terminal (7) is part of the interchangeable equipment item (2).

8. A method according to claim 1 **characterised in that** the operating terminal (7) is part of the equipment of the tractor (1).

9. A method according to claim 1 **characterised in that** the control system includes a field bus (17).

10. A method according to claim 1 **characterised in that** the control system (4, 15) includes at least one pressure sensor (41) which produces at least one input signal for the job computer (18, 18').

11. A method according to claim 1 **characterised in that** the control system (4, 15) includes at least one position sensor (42, 42', 43, 43', 44, 44') which produces at least one input signal for the job computer (18, 18').

12. A method according to claim 1 **characterised in that** the interchangeable equipment item (2) includes a mowing mechanism with at least two drive units (26, 27).

## Revendications

1. Procédé d'actionnement d'un moyen de commande pour un ensemble tracteur-outil (1, 2) comprenant au moins un équipement échangeable (2), lesquels forment par leur action conjointe une machine de travail agricole, le tracteur (1) comportant un circuit hydraulique de fonctionnement avec au moins un moyen de commande conformé en bloc de commande (4) avec au moins deux valves directionnelles, de préférence deux segments de bloc de valves (31, 32), l'équipement échangeable (2) pouvant être couplé par l'intermédiaire d'au moins une prise de force hydraulique au circuit hydraulique de fonctionnement du tracteur (1), et l'équipement échangeable (2) comportant un moyen de commande (15) en forme de calculateur de tâches commandé par microprocesseur (18, 18'), lequel est relié à une unité d'actionnement (7) de manière télécommandée depuis la cabine de conduite (3) du tracteur (1), les instructions de commande destinées à commander l'équipement échangeable (2) pouvant être émises soit par l'unité d'actionnement (7) soit par le bloc de commande (4) et agissant sur des actionneurs et/ou des unités d'entraînement et/ou des mécanismes de positionnement de l'équipement échangeable (2), **caractérisé en ce que** l'ensemble tracteur-outil (50) comporte un moyen de commande à deux modes (51) comprenant deux modes de commande, de façon qu'au moins une unité d'entraînement ou un ou plusieurs mécanismes de positionnement soient actionnables dans l'un des modes de commande manuellement par l'intermédiaire d'un terminal d'actionnement (7) et de ses touches d'actionnement (9, 10, 11, 12, 13) sous assistance logicielle par l'intermédiaire du calculateur de tâches côté outil (18, 18') ou, selon une variante, dans le second mode de commande manuellement par l'intermédiaire des valves de commande, respectivement de leurs segments de bloc de valves (31, 32) du bloc de valves de commande (4) du circuit hydraulique de fonctionnement du tracteur (1), les deux modes de commande étant enchaînés et montés activement en parallèle, le moyen de commande manuelle d'un circuit hydraulique de tracteur étant combiné avec le moyen de commande à microprocesseur orienté complexité d'un ou de plusieurs calculateurs de tâches (18, 18') d'un équipement échangeable, de sorte qu'il est possible d'assigner un mode de commande présélectionnable, commandé par microprocesseur, à un élément d'actionnement à action manuelle du moyen de commande manuel du circuit hydraulique de tracteur, de façon que ce mode de commande soit assigné à cet élément d'actionnement en auto-maintien, l'actionnement de cet élément d'actionnement permettant de déclencher l'opération de commande complexe, l'assignation de ce mode de commande en auto-maintien par rapport à l'unité d'actionnement du circuit hydraulique de tracteur restant maintenue jusqu'à ce que soit déclenchée, par actionnement d'un élément d'actionnement du terminal d'actionnement (7) du moyen de commande à microprocesseur, une autre instruction de commande qui met simultanément fin à l'auto-maintien de l'assignation du mode de commande.

2. Procédé selon la revendication 1, **caractérisé en ce que** les deux systèmes de commande (4, 15), celui du circuit hydraulique de fonctionnement, conformé en bloc de commande (4) avec au moins deux segments de bloc de valves (31, 32), et celui du moyen de commande à calculateur de tâches (15) avec au moins un calculateur de tâches côté outil (18, 18'), sont actionnables parallèlement l'un à l'autre, les deux systèmes de commande (4, 15) étant mis en réseau entre eux et montés activement en parallèle l'un à l'autre.

3. Procédé selon la revendication 1, **caractérisé en ce que** la mise en réseau de deux systèmes de commande (4, 15) s'effectue, d'une part, par l'intermédiaire des segments de bloc de valves (31, 32) du circuit hydraulique de fonctionnement du tracteur (1) et, d'autre part, par l'intermédiaire de valves directionnelles commandées électriquement (34, 34', 35, 35', 37, 37 ; 38, 39, 40), d'au moins un capteur de position (42, 42', 43, 43', 44) et d'au moins un capteur de pression (41).

4. Procédé selon la revendication 1, **caractérisé en ce que** le montage en parallèle des deux systèmes de commande (4, 15) s'effectue, d'une part, par l'intermédiaire des segments de bloc de valves (31, 32) du circuit hydraulique de fonctionnement du tracteur (1) et, d'autre part, par l'intermédiaire de valves directionnelles commandées électriquement (34, 34', 35, 35', 37, 37 ; 38, 39, 40), d'au moins un capteur de position (42, 42', 43, 43', 44) et d'au moins un capteur de pression (41).

5. Procédé selon la revendication 1, **caractérisé en ce qu'**en mode de travail les deux systèmes de commande (4, 15) sont toujours montés activement indépendamment l'un de l'autre.

6. Procédé selon la revendication 1, **caractérisé en ce que** le moyen de commande comprend un terminal d'actionnement (7).

7. Procédé selon la revendication 1, **caractérisé en ce que** le terminal d'actionnement (7) fait partie de l'équipement échangeable (2).

8. Procédé selon la revendication 1, **caractérisé en ce que** le terminal d'actionnement (7) fait partie de l'équipement du tracteur (1).

9. Procédé selon la revendication 1, **caractérisé en ce que** le moyen de commande comprend un bus de champ (17).

10. Procédé selon la revendication 1, **caractérisé en ce que** le moyen de commande (4, 15) comprend au moins un capteur de pression (41) qui génère au moins un signal d'entrée pour le calculateur de tâches (18, 18').

11. Procédé selon la revendication 1, **caractérisé en ce que** le moyen de commande (4, 15) comprend au moins un capteur de position (42, 42', 43, 43', 44) qui génère au moins un signal d'entrée pour le calculateur de tâches (18, 18').

12. Procédé selon la revendication 1, **caractérisé en ce que** l'équipement échangeable (2) comprend un mécanisme de coupe avec au moins deux unités de travail (26, 27).
